# EUROPEAN PATENT APPLICATION

(11) **EP 0 664 947 A1**
(43) Date of publication of application: **02.08.1995**
(21) Application number: 95200667.4
(22) Date of filing: 15.12.1987
(51) Int. Cl.: A01D 67/00, A01D 75/20, A01D 78/10

(54) **An agricultural machine**

(30) Priority: 23.12.1986 NL 8603268; 29.05.1987 NL 8701275; 30.09.1987 NL 8702328
(62) Divisional of application: 90203511.2
(71) Applicant: C. van der Lely N.V., NL-3155 PD Maasland (NL)
(72) Inventor: van der Lely, Edwin, NL-3155 PD Maasland (NL); Bom, Cornelis Johannes Gerardus, NL-3181 VC Rozenburg (NL)
(74) Representative: Mulder, Herman

(57) **Abstract**

The invention relates to an agricultural machine which is adapted to be coupled by means of a trestle (10) to a lifting hitch (14) of a tractor, and which machine comprises a frame constituted by a main frame beam (64) and outer carriers (67) which are pivotable with respect to said main frame beam (64). The main frame beam (64) is pivotable coupled to the trestle (10) via an arm (16), the implement further comprises tractor drivable inner and outer rake members (3), each of the rake members (3) comprising haymaking tines. The machine further comprises for the rake members (3) of the outer carriers (67) protective members (69). When the machine is brought into the transport position the protective members (69) are brought into another position by means of adjusting means (72, 73) that are fitted on the main frame beam (64).

## Description

The invention relates to an agricultural machine which is adapted to be coupled by means of a trestle to a lifting hitch of a tractor, comprising a frame constituted by a main frame beam and outer carriers pivotable with respect to said main frame beam about pivot pins substantially in the direction A of operative travel, which main frame beam and outer carriers extend in a first, operative position in a substantially horizontal direction transverse to the direction A of operative travel, the main frame beam being coupled to the trestle via an arm, the machine further comprising tractor drivable inner and outer rake members, each of the rake members comprising haymaking tines, the inner rake members being coupled to said main frame beam, the outer rake members being coupled to said carrier and together, with said carriers, pivotable upwardly around said pivot pins in a second, transport position, the inner and outer rake members in the first position being rotatable, the machine further comprising for each outer carrier at each side of the main frame beam a protective member which, with respect to the direction A of operative travel, protects in said first position of said rake members e.g. persons from contact with at least a foremost part of a rake member, adjusting means to accomplish a movement of said protective members into another position by moving the outer rake members into the second position, the other position of the protective members being forward and at least partially laterally outboard of the respective outer rake members, whereby protection of e.g. persons from contact with at least a foremost part of the outer rake members is maintained.

A machine of this kind is described in EP-PA-0083460. In said machine the main frame beam is fixed relative to the trestle via an arm which at one end is rigidly coupled with the main frame beam and at the other end with the trestle. Furthermore, the adjusting means, which accomplish a movement of the protective members, are rigidly connected with said arm. The above described construction has the disadvantage that the machine is not able to follow the path of the tractor, when e.g. the tractor is making a turn. When the above mentioned disadvantage will be solved, the latter being possible as described hereafter, then, when the outer rake members are moved into the transport position while the machine is not in line with the tractor at that moment, another problem will arise as the adjusting means are not able to perform their function any longer, with the consequence that in the transport position of the machine the protective members do not screen the foremost part of the outer rake members.

The invention has for its object to provide a machine which is able to follow the path of the tractor trailing the machine, under the condition that the adjusting means retain their function in each position of the machine relative to the tractor and thus will become active as soon as the outer rake members are moved into the transport position.

According to the invention this is achieved in that the main frame beam is pivotable relative to the trestle in a direction transverse to the direction A of operative travel and the adjusting means are fitted to the main frame beam.

Due to the fact that the adjusting means are fitted to the main frame beam, it is achieved that the movement or the position of the arm relative to the main frame beam has no influence on the function of the adjusting member.

When the machine according to the invention, has to be brought in the transport position, the tractor driver does not have to take care of the position of the machine relative to the tractor, as the adjusting means retain their function.

However, the above idea of free pivotability is known per se, e.g. from DE-A-15 57 877, that the machine is not provided with protective members, preventing e.g. persons from contact with rake members.

For a better understanding of the invention and to show how the same may be carried into effect, reference will now be made, by way of example, to the accompanying drawings of some advantageous embodiments of the machine according to the invention, in which drawings:
Figure 1 is a plan view of part of a machine, which is provided with a locking device;
Figure 2 is a side view of the part of the machine as shown in Figure 1;
Figure 3 is a plan view of part of a machine, which is provided with a second embodiment of a locking device;
Figure 4 is a side view taken in the direction of the arrow IV in Figure 3;
Figure 5 is a rear view taken in the direction of the arrow V in Figure 4;
Figure 6 is partly a cross-section and partly a view taken along the lines VI-VI in Figure 5;
Figure 7 is a cross-section taken along the lines VII-VII in Figure 6, and
Figure 8 is a cross-section taken along the lines VIII-VIII in Figure 6 of an additional locking to either of the two preceding machine lockings destined for a transportation position.

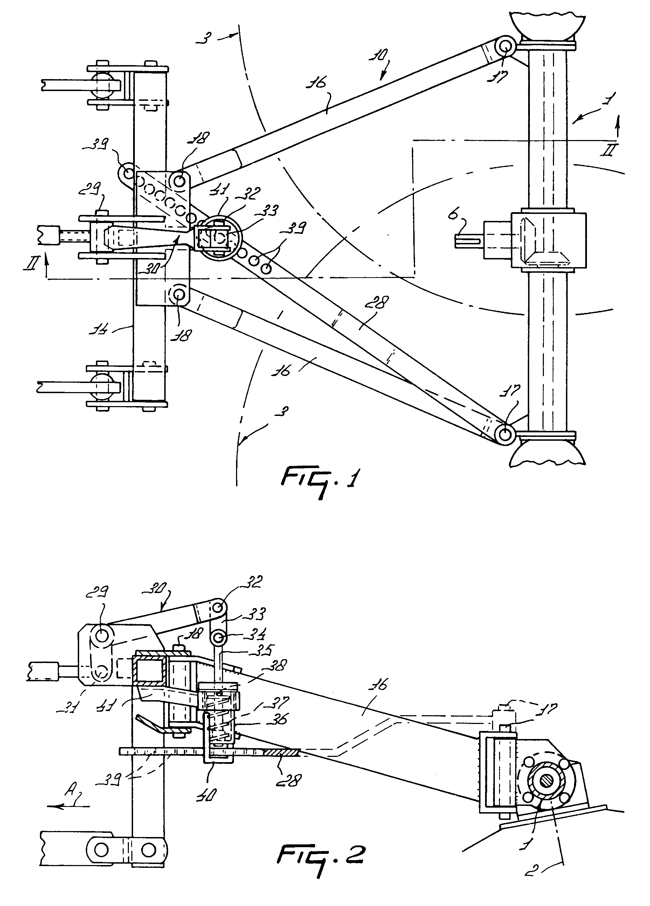

The invention relates to measures for improving the dynamic behaviour of tractor-drawn machines during driving thereof over the field in an operative position, in which connection it is essential for the machine to be freely pivotal relative to the tractor with a view to the turns to be taken. The above coupling devices 10 may be employed separately, but they may alternatively constitute part of a so-called lateral flotation device which ensures that the machine, after having been lifted by a three-point lifting hitch from the tractor, is locked automatically with respect to the tractor so as to prevent a pivoting movement about the instantaneous pivot axis 20, 27, e.g. during transportation by road. Figures 1 and 2 show such a locking device.

One end of a locking bar 28 is fitted pivotally about one the pivot shafts 17, about which one of the arms 16 is pivotal with respect to the frame beam 1 during operation of the machine. From the pivot shaft 17, the bar 28 is directed obliquely forwardly in such a way that, seen in plan view, it passes at a short distance behind the centre of the three-point trestle 14.

Near the upper coupling point of the trestle 14 there is bearing-supported an approximately horizontal pivot shaft 29, which is arranged at a short distance in front of the trestle and extends transversely to the direction of operative travel A.

A lever 30 is pivotal about the pivot shaft 29. One leg of the lever 30 extends downwardly from said shaft 29, while the other leg extends rearwardly therefrom and reaches to behind the trestle 14 (Figure 2). The lowermost end of the downwardly directed leg is provided with a pin 31 for coupling of the upper lifting arm to the lifting hitch. By means of a pin 32 extending parallel to the pivot shaft 29 the rearmost point of the other leg is connected pivotally to a link 33 which is located below the lever arm and itself is coupled to a downwardly directed locking pin 35 by means of a pin 34 extending parallel to the said pin 32. The lower end of the locking pin 35 projects into a cylindrical guide sleeve 36 which is in a fixed position relative to the trestle 14. The sleeve 36 envelops a pre-tensioned pressure spring 37, which at its bottom side bears on an internal shoulder provided near the lower edge of the sleeve 36 and at its upper side presses against a pin 38 inserted through the pin 35, so that the spring 37 tries to push the locking pin 35 upwardly. In this situation, the pin 38 can bear on an upper cover of the sleeve 36, the said cover constituting a stop. The lower end of the pin 35 projects slightly from the bottom of the sleeve 36 and reaches to a short distance above the upper face of the locking bar 28, which in the region near the sleeve 36 is provided with a plurality of apertures 39 extending parallel to the pin 35. In any position of the machine relative to the tractor, the bar 28 is passed just below the locking pin 35 by means of a U-shaped bracket 40 which is rigidly connected to the sleeve 36 and carries the said bar 28. The sleeve 36 is supported capable of pivoting about its centre line by a support 41 connected to the trestle 14.

During operation, the machine bears on the soil by means of its supporting members 7, while the trestle 14 is connected to the three-point lifting hitch of the tractor. In this case, the top rod of the lifting hitch does not load or hardly loads the lever 30, so that the spring 37 pushes the locking pin 35 upwardly, thus causing the pin 38 to be located against its stop. In this manner, the pin 35 is prevented from moving downwardly when the top rod is temporarily loaded shockwise during driving over uneven fields.

When the machine is lifted with the aid of the three-point lifting hitch, the top rod of the lifting hitch exercises a continuous, forward tensile force on the pin 31, thus causing the lever 30 to pivot about the pivot shaft 29 and the pin 35 to be forced downwardly, as a result of which the pre-tension of the spring 37 is overcome. Consequently, the lower end of the pin 35 is passed through one of the apertures 39, after the driver, prior to lifting, either by driving a curve or not, has previously determined the desired locked position of the machine relative to the tractor. Since, seen in plan view as shown in Figure 1, a pair of the pivot shafts 17 and 18 and the pin 35 form a triangular construction, the machine is locked relative to the tractor in the lifted position, so that oscillations about the instantaneous pivot axis 20, 27 cannot possibly occur.

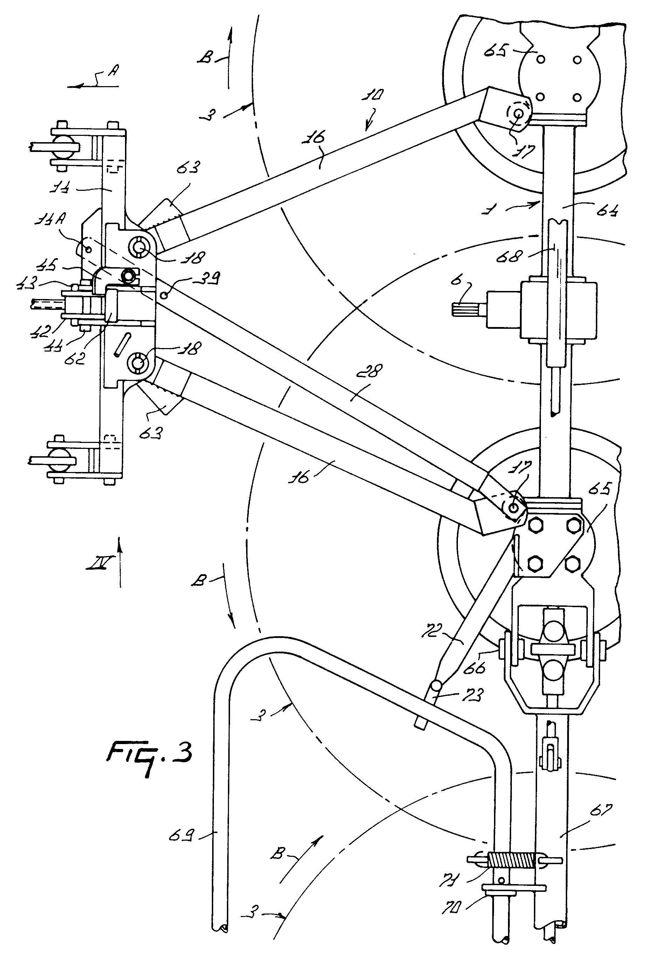

Figures 3 to 7 show a second embodiment of a flotation and locking device. The reference numerals occurring therein and corresponding to those used in the foregoing relate to the same or analogous parts of the machine.

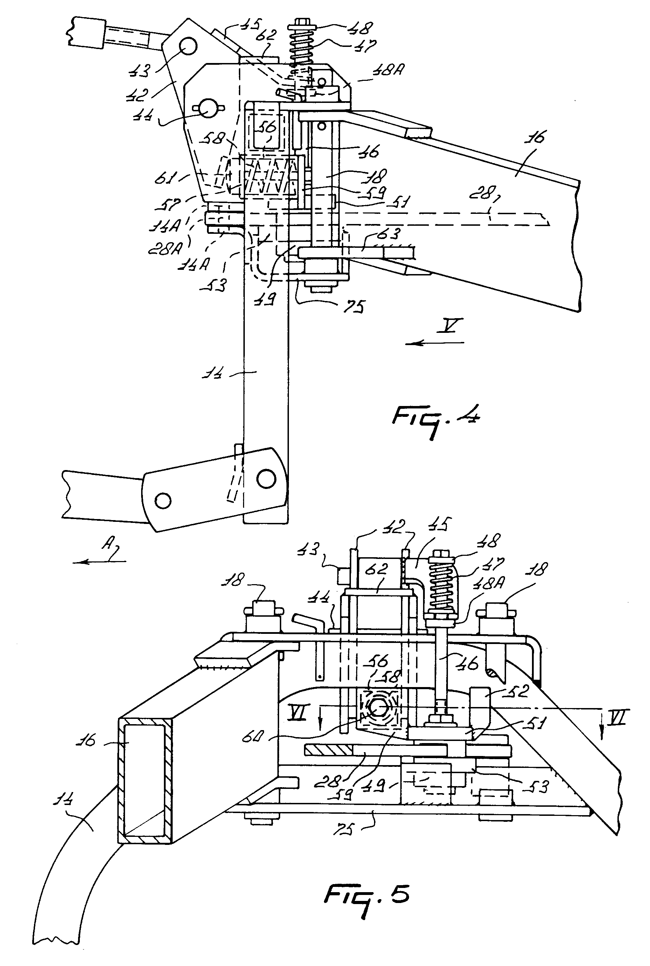

Near its two lower ends, the trestle 14 (Figure 4) is again connected pivotally to the lower arms of the three-point lifting hitch of a tractor and, near its top side, it is connected pivotally about a transverse pivot shaft 43 by means of a coupling member 42 to the upper arm of said three-point lifting hitch of the tractor. The coupling member 42 is pivotal relative to the trestle 14 by means of an approximately horizontal pivot shaft 44 directed prependicularly to the said trestle 14. The pivot shaft 44 is located below and slightly behind the pivot shaft 43. The coupling member 42 extends over some distance below the pivot shaft 44. At its rear top side, the coupling member 42 is provided with a lever 45 (Figures 4 and 5) which is directed rearwardly therefrom and which near its rear end located, seen in side view (Figure 4), behind the rear side of the trestle 14 is provided with a slotted recess that is open towards the rear. Through said slotted recess there is provided an approximately vertically directed rod 46, which extends both over some distance above the rear end of the lever 45 and over some length therebelow. The portion of the rod 46 located above said slotted recess in the lever is surrounded by a pressure spring 47 which at its lower end bears on the rear end of the lever 45 and with its top end presses against a shoulder 48 fitted on the rod 46. The rod 46 is also provided with a shoulder 48A (Figure 5) which, when the machine rests on the soil, bears against the bottom side of the lever 45. During operation, the lower end of the rod 46 is fitted rigidly, although adjustably in the axial direction of the rod, to a cylindrical cup 49 (Figure 7). The centre line of the cylindrical outer circumference of said cup coincides with that of the rod 46. The cup 49 has a cover to which the rod 46 is attached and a bottom wherein a pin 50 is screwed. The centre line of the pin 50 coincides with that of the rod 46 as well as with that of the cylindrical outer circumference of the cup 49. Taken in the axial direction, the pin 50 extends over approximately half of the axial length of the cylindrical space enclosed by the cup 49 thereinto. Taken in the upward direction, the pin 50 is tapering. At its cylindrical outer circumference, the cup 49 is passed with some clearance through a ring 51, which is attached rigidly to the trestle 14 by means of a support 52, and, at some distance below said ring 51, through a cylindrically apertured plate 53 (Figure 7), which both prevent movements perpendicular to the centre line of the cup as well as to that of the rod 46, although allowing some pivotal movement of the cup 49 about the said centre line.

At two opposite sides of its cylindrical wall, the cup 49 is provided with an approximately square aperture 54, the circumference of which two apertures, seen in Figure 12, are in alignment. The locking bar 28 is inserted through the two apertures 54 and, outside the cup 49, bears on the plate 53. Measured perpendicularly to the centre line of the rod 46, the width of the two openings 54 is slightly larger than that of the locking bar 28 as shown in Figure 11. As is apparent from Figure 7, the apertures 39 provided in the locking bar 28 in order to be able to set the various positions of the frame beam 1 in the lifted condition of the machine relative to the tractor have a tapering boundary 55 which fits about the outer boundary of the tapering pin 50. During operation of the machine, the bar 28 is located in the upper regions of the apertures 54. In this working position, the upper end face of the pin 50 extends to shortly below the lowermost boundary face of the bar 28, so that, when the ground wheels 7 of the machine bear of the soil, the bar 28 is freely movable in the cup 49 in its longitudinal direction and hence the machine is freely pivotal behind the tractor.

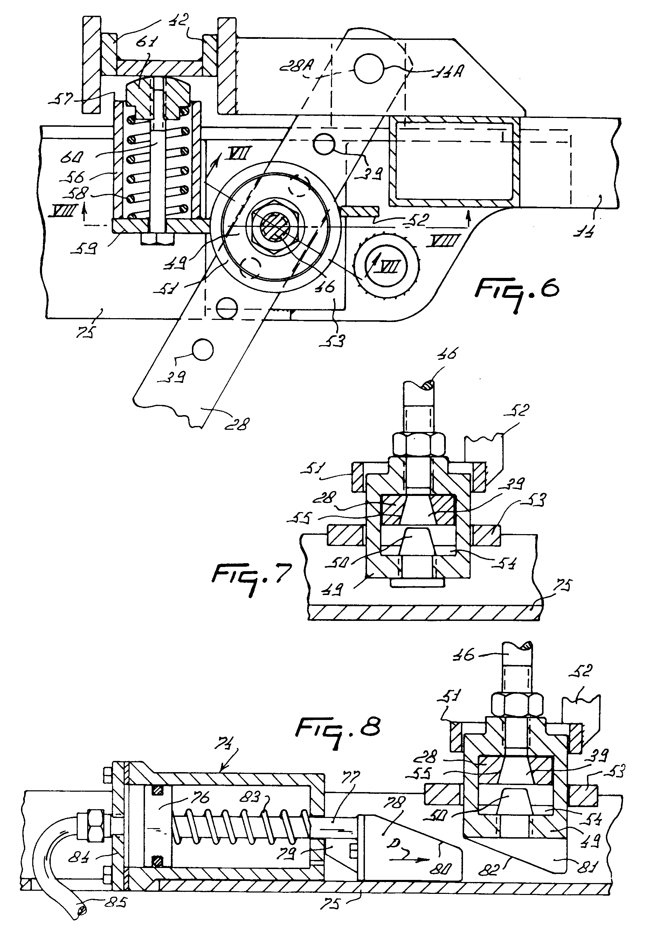

To the trestle 14 there is fitted a housing 56 in the shape of a tube having a square cross-section (Figures 4 to 6). The centre line of said housing 56 is directed horizontally and perpendicularly to the plane of the trestle 14. The housing 56 is arranged at some distance below the pivot shaft 44 while, seen in plan view, its front end face 57 projects beyond the frontmost boundary of the trestle 14. The centre line of the housing 56 crosses the pivot shaft 44 near the middle of the length thereof. The arrangement is such that, taken in the direction of operative travel, the lower-most part of the coupling member 42 extending below the pivot shaft 44 is positioned with its rear side in front of the end face 57 of the housing 56. The housing 56 encloses a pressure spring 58 which at its rear end bears against a bottom plate 59 of the housing 56, by means of which bottom plate the housing is rigidly attached to the trestle 14. The bottom plate 59 includes a bore through which is passed a pin 60, the centre line of which coincides with that of the housing 56 (Figure 6). The end of the spring 58 facing the coupling member 42 carries a pressure member 61 which, when the spring 58 is in unloaded condition, projects to some extent beyond the end face 57. When the pressure member 61 is loaded in the rearward direction, it can be moved into the space enclosed by the housing 56 until being flush with the end face 57 thereof.

To the top side of the trestle there is fitted a horizontal stop plate 62 (Figures 3 and 4), the frontmost boundary of which constitutes a stop for the part of the coupling member 42 located above the pivot shaft 44 when moving rearwardly.

When, during operation, the machine moves across the field, i.e. when its weight bears on the soil by means of the ground wheels 7, and performs pivotal movements about an imaginary axis directed parallel to the frame beam 1 owing to the unevennesses in the soil, the lowermost end of the coupling member 42 is continuously in contact with the pressure member 61 then projecting in front of the face 57. As is apparent from Figure 4, the pressure member 61 exerts about the pivot shaft 44 a moment which is directed clockwise, as a result of which the rear end of the lever 45, and hence also the lower end of the spring 47, is located in a lowermost position. This lowermost position corresponds to that of the rod 46 and of the cup 49, so that the locking bar 28 bearing on and sliding over the plate 53 is located above the pin 50 (Figure 7), thus allowing the machine to adjust itself freely pivotally relative to the tractor. For the size of the spring 58 is such that the forces occurring in the top rod of the lifting hitch during the said pivotal movements of the machine can be counter-balanced without or with very small pivotal movements of the coupling member 42 about the pivot shaft 44. Consequently, the spring 58 effects a free slidability of the locking bar 28 through the cup 49. During operation, the front side of the stop plate 62 serves as the stop whereagainst the coupling member 42 can bear in cooperation with the spring 58.

When the machine is lifted by means of the three-point lifting hitch of the tractor, there occurs in the top rod thereof a comparatively large force owing to the machine's weight, which force, as seen in the side view of Figure 4, causes the coupling member 42 to pivot counterclockwise about the pivot shaft 44, as a result of which the spring 58 is compressed to the extent that the pressure member 61 is pushed completely into the space enclosed by the housing 56 and the lowermost end of the coupling member 42 bears against the end face 57 then serving as a stop there-for. As a result of this, the pin 50 is moved in one of the apertures 39 in the locking bar, thereby locking same relative to the trestle. Consequently, the frame beam 1 together with the operating members attached thereto are no longer capable of sideward movement relative to the tractor, because the pivotal movement of the arms 16 about the pivot shafts 17 and 18 is blocked. In case, prior to the lifting of the machine, the pin 50 is not located below any one of the apertures 39, the tractor driver first lifts the machine to such an extent that only part of its weight it taken up by the lifting hitch, subsequently drives a small turn and finally lifts the machine as a whole, as a result of which the pin 50 will enter into one of the apertures 39. The entering of the pin 50 into an aperture 39 is facilitated by the tapering design of both the pin 50 and the aperture 39.

This tapering design of pin and aperture also plays a part when the machine is set down after e.g. at the head of the field a 180 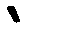 turn has been driven with the machine in lifted condition. This is also the case when the machine is arranged in an oblique position behind the tractor and owing thereto, during setting down, is subjected to transverse forces exerted on the ground wheels, in particular when, in addition, there has been driven a turn which increases said transverse forces. During setting down of the machine, the pin which then is to withdraw from the aperture is subjected to comparatively large transverse forces exerted by the boundary 55 of the aperture 39. The tapering design of pin and aperture effects that only a small downward axial displacement of the pin 50 relative to the aperture 39 (caused by the spring 58) already produces a certain clearance between the pin still present in the aperture and the aperture's boundary, so that the friction between them ceases to exist and the pin is allowed to withdraw further therefrom.

The presence of the spring 58 and the pressure member 61 achieves that, during lifting of the machine, due to a comparatively small pivotal movement of the coupling member 42 about the pivot shaft 44 the machine is tilted to a comparatively lesser extent rearwardly and downwardly relative to the lifting hitch, so that the height over which the machine has to be lifted (e.g. in order to be lifted across a swath) is considerably less than with prior art machines wherein, comparatively speaking, the pivotal movement of the coupling member 42 and the rearward tilt ensuing therefrom are considerably larger.

When, during operation, the machine drives across the field, there will occur owing to unevennesses in the soil a reciprocating tilting movement about an imaginary transverse axis, which movement in the region of the machine's attachment to the lifting hitch could give rise to jolting forces and also could change continuously the distance between the rake members' tine points and the soil or the stubbles, thus adversely affecting the working results of the machine. This continuous tilting movement is suppressed considerably due to the presence of the spring 58 and the pressure member 61 bearing against the lowermost part of the coupling member 42, which pressure member 61 projects in front of the end face 57 during operation.

Near its front end, the locking bar 28 is provided with an aperture 28A which in a position suitable for transportation of the machine, in side view, coincides with apertures 14A arranged rigidly relative to the trestle 14 (Figure 4). For security reasons there is inserted through said apertures 14A and 28A by hand a locking pin prior to transportation of the machine; of course, this locking pin should be removed prior to starting its operation.

However, it is also possible that the tractor driver will forget to insert the locking bar through the apertures 14A and 28A, so that, during transportation by public road, the danger arises that the greater part of the then lifted machine, pivoting about the pivot shafts 18, is displaced laterally in an unwanted manner when e.g. very strong vertical accelerations would occur owing to a very bad road surface condition. In case of strong shocks, the coupling member 42 might move about the pivot shaft 44 to such an extent that the pin 50 leaves the aperture 39 notwithstanding the action of the spring 58. In order to provide an absolute security during transportation by public road, there is proposed an automatic locking as is shown in Figure 8. The parts denoted by the reference numerals 28, 39, 46 and 49 to 55 relate to the same construction as those shown in Figure 7.

To the latter, above described construction there is added a very simple hydraulic cylinder 74, which is arranged in the immediate vicinity of the cup 49. The centre line of the cylinder 74 extends approximately horizontally and is directed perpendicularly to that of the rod 46. The cylinder 74 is rigidly mounted on an approximately horizontal supporting plate 75, which is rigidly attached to the trestle 14. The cylinder 74 includes a piston 76 attached to a piston rod 77. The piston rod 77 emerges from the cylinder 74 at the side facing the cup 49. At the emerging end of the piston rod 77 there is provided a locking member 78 which with its flat bottom side rests on and is slidable over the upper side of the supporting plate 75. The locking member 78 includes a stop 79 capable of bearing against the adjacent end of the cylinder 74. Seen in the view as shown in Figure 8, the locking member 78 has an upper face 80 which provides a wedge-shape thereto and, taken from its free end, extends obliquely upwardly into the direction of said cylinder 74. At its bottom side, the cup 49 is provided with an equally wedge-shaped bottom member 81 which, at its side facing the locking member 78, is bounded by a bevelled sliding face 82 which, at least in the locked condition, completely fits to the upper face 80 of the locking member 78.

Between the end face of the cylinder 74 partly enveloping the piston rod 77 and the piston 76, there is arranged about said piston rod 77 a pressure spring 83.

In the end wall 84 of the cylinder 74 facing away from the locking member 78 there is arranged a connection of an hydraulic line 85. The hydraulic line 85 is connected to the hydraulic supply line of a (further to be discussed) hydraulic cylinder 68 (Figure 2), by means of which hydraulic fluid is supplied under pressure to said cylinder 68 when (further to be discussed) carriers 67 carrying the outer rake members 3 are pivoted upwardly into a transportation position. Inside the hydraulic cylinder 74, that portion of the space accommodating the spring 83 is not filled with hydraulic fluid and is in open connection with the outer air.

During normal operation of the machine, the two carriers 67 are capable of moving freely in upward and downward direction to some extent relative to the main frame beam 64 under the influence of the unevennesses in the soil. In this case, the hydraulic fluid present between the end wall 84 and the piston 76 is almost unpressurized. Then, the pressure spring 83 is dimensioned such that the piston 76 is in the position as shown in Figure 8, in which position the stop 79 bears against the adjacent end wall of the cylinder 74. In this case, as seen in Figure 8, the locking member 78 is located as a whole to the left-hand side of the cup 49.

As has been set out in the preceding, when the tractor driver lifts the machine by means of the lifting hitch of the tractor, the cup 49 moves in the upward direction until the pin 50 enters into any one of the conical apertures 39. When subsequently the driver pivots the carriers 67 upwardly into a transportation position by means of the hydraulic cylinder 68, then the hydraulic fluid present between the end wall 84 and the piston 76 is pressurized due to this upward pivoting movement of the carriers 67. The dimensioning is such that the force exerted hereby on the piston 76 compresses the spring 83, as a result of which the piston 76, the piston rod 77 and the locking member 78 are displaced into the direction D. Consequently, the locking member 78 slides below the cup 49, so that, when the carrier 67 is folded upwardly (i.e. the transportation position during driving by public road), the pin 50 is prevented from leaving the aperture 39 in question. As a result, it is impossible for the machine to swivel away sidewardly all of a sudden owing to vigorous vertical jolts.

When the tractor driver first folds the carriers 67 upwardly while the machine still rests on the soil, then the locking member 78 slides against the sliding face 82 of the bottom member 81. In this situation, however, the locking member 78 is incapable of pushing the cup 49 upwardly via the shoulder 48A, the lever 45 and the coupling member 42 counter to the force of the rigid spring 58. Not until the driver lifts the machine, the cup 49 is moved upwardly, thus allowing the locking member 78 to slide below the bottom member 81 and thereby effecting a safe transportation position. It should be noted that in the locking position it may be desirable to have some clearance between the faces 80 and 82, which clearance, preferably, is half the height of the pin 50. In this position, however, the locking member 78 may also bear against said bottom member 81.

In case it is desirable to carry out the above-described transition into the transportation position in the reversed direction, the driver can first fold the carriers 67 downwardly prior to placing the machine onto the soil. Then, the space between the end wall 84 and the piston 76 is not pressurized (e.g. being in connection with the fluid tank of the hydraulic system of the tractor). The spring 83 presses the piston 76 into the direction of the end wall 84, so that the locking member 78 is displaced into the direction of the cylinder 74 until the stop 79 bears thereagainst. When subsequently the machine is placed onto the soil, the cup 49 is capable of moving freely in the downward direction, whereby the pin 50 leaves the aperture 39 and the machine is coupled freely pivotable behind the tractor.

When the driver first places the machine onto the soil, the cup 49 is at first incapable of downward movement or only capable thereof over a small height, so that the pin 50 does not leave the aperture 39 completely. However, when the driver subsequently folds the carriers 67 downwardly to their freely pivotal position suitable for operation, then the space between the end wall 84 and the piston 76 is unpressurized. Then, the pressure spring 83, in combination with the horizontal component of the force exerted by the bevelled face 82 on the thereto parallel upper face 80 of the locking member 78, is capable of displacing the locking member 78 into a direction counter to the direction D. Due to the downward movement of the cup 49, the pin 50 then leaves the aperture 39 in question completely so as to allow the machine to be freely pivotal relative to the tractor. When the locking arrangement according to Figure 8 is employed, it is, of course, possible to omit the locking pin to be inserted through apertures 14A and 28A.

As is apparent from Figure 3, near their associated pivot shafts 18, the two arms 16 are provided with stops 63. The vertical outer boundary faces of the stops 63 enclose an angle with the vertical outer boundary faces of the arms 16 so that the frame beam 1 can be pivoted maximum untill the outer boundaries of the stops 63 bear against the trestle 14. The arrangement of the stops is chosen such that, when a stop bears against the trestle 14, one of the rake members cannot contact e.g. the tyre of one of the tractor wheels or a side of the trestle 14.

As is apparent from Figure 2, the machine shown therein is designed as a haymaking machine comprising a main frame beam 64 which near its ends carries bearing-supported rake members, which members are supported by means of ground wheels. Closely adjacent to the gear boxes 65 bearing-supporting the rake members and by means of which they are drivable, the main frame beam 64 includes horizontal pivot pins 66 extending perpendicularly to the longitudinal direction thereof, about which pivot pins 66 there are capable of pivotal movement upwardly and downwardly carriers 67 which at their ends facing away from the main frame beam 64 bearing-support outer rake members. In case the main frame beam 64 is directed parallel to the carriers 67, their centre lines will coincide. In order to pivot the machine into a position suitable for transportation, the carriers 67 are folded upwardly through an angle of 90 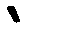 or more by means of a (schematically shown) hydraulic cylinder 68 bridging the main frame beam 64 . The rake members bearing-supported at the outer ends of the carriers 67 have haymaking tines which in said transportation position project outwardly and, during transportation by public road, might present a danger to people passing by. For the use during normal operation, there are arranged screening bows 69 to prevent people from approaching the rotating rake members too closely. Seen in plan view, the during normal operation horizontally arranged screening bows 69 screen off the front sides of the rotational paths followed by the rake members' tines and, if so desired, the rear sides thereof as well. Each screening bow 69 is mounted capable of pivotal movement relative to its associated carrier 67 by means of a simple pivot sleeve 70, which pivot sleeves together constitute a pivot axis extending parallel to their associated carriers 67. Since the centre of gravity of a screening bow is located at some distance in front of the pivot sleeves 70, there is arranged a spring 71 counter-balancing the weight of a screening bow 69. To an adjacent gear box 65 there is fitted an obliquely forwardly and outwardly extending support 72 which at its end carries a tube 73 folded through 90 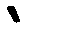 , the horizontal leg of which tube extends to below the adjacent screening bow and partly carries the weight thereof. The other leg of the folded tube 73 extends from the end of the support 72 upwardly and is located near a part of the screening bow 69 carried by the horizontal leg. In the working position of the machine, the supports 72 and the screening bows 69 are located approximately in the same horizontal plane, in which case the screening bows 69 are arranged above the rake members, at least above the tine points.

When the carriers 67 are folded upwardly about the pivot pins 66 into the transportation position by means of the hydraulic cylinder 68, then the parts of the screening bows 69 located near the associated tubes 73 move towards the respective upright legs thereof, since, seen in the direction of operative travel, said upright legs are arranged at a short distance outside the adjacent pivot pins 66 and the tubes 73 are fitted rigidly to the gear boxes 65 associated with the main frame beam 64. During the upward pivotal movement of the carriers 67, the screening bows 69 contact the upright legs in such a manner that, relative to the carriers 67 as well as relative to the raking members attached thereto, they pivot along the front sides of the raking members into the direction of the tine points, whereby the forces inside the springs 71 increase. The dimensioning is such that, when the carriers 67 have reached their approximately vertical end position, the screening bows 69, relative to the upwardly pivoted raking members attached to the carriers 67, are pivoted to such an extent that, seen in the direction of operative travel, they are located at the outer sides of the plane wherein the tine points of the upwardly pivoted raking members are situated. In this manner, the pivoted screening bows 69 screen off the upwardly folded raking members at their outer sides and prevent, also in this position, people present in the vicinity of the sides of the transported machine from being hurt. It is, of course, also possible to arrange such screening bows, which have a screening function in the working position as well as in the transportation position, to the rear sides of the carriers 67.

The above-described constructions may alternatively be employed in machines of a different type, e.g. mowers, sprayers and fertilizer spreaders.

The invention is not limited to the features as described in the description and as claimed in the claims, but also includes any combination of measures as described in the description and illustrated in the drawings.

## Claims

1. An agricultural machine which is adapted to be coupled by means of a trestle (10) to a lifting hitch (14) of a tractor, comprising a frame constituted by a main frame beam (64) and outer carriers (67) pivotable with respect to said main frame beam (64) about pivot pins (66) substantially in the direction (A) of operative travel, which main frame beam (64) and outer carriers (67) extend in a first, operative position in a substantially horizontal direction transverse to the direction (A) of operative travel, the main frame beam (64) being coupled to the trestle (10) via an arm (16), the machine further comprising tractor drivable inner and outer rake members (3), each of the rake members (3) comprising haymaking tines, the inner rake members being coupled to said main frame beam (64), the outer rake members being coupled to said carriers (67) and together, with said carriers (67), pivotable upwardly around said pivot pins (66) in a second, transport position, the inner and outer rake members (3) in the first position being rotatable, the machine further comprising for each outer carrier (67) at each side of the main frame beam (64) a protective member (69) which, with respect to the direction (A) of operative travel, protects in said first position of said rake members e.g. persons from contact with at least a foremost part of a rake member, adjusting means (72, 73) to accomplish a movement of said protective members (69) into another position by moving the outer rake members into the second position, the other position of the protective members (69) being forward and at least partially laterally outboard of the respective outer rake members, whereby protection of e.g. persons from contact with at least a foremost part of the outer rake members is maintained, characterized in that the main frame beam (64) is pivotable relative to the trestle (10) in a direction transverse to the direction (A) of operative travel and the adjusting means (72, 73) are fitted to the main frame beam (64).

2. An agricultural machine according to claim 1, characterized in that the adjusting means (72, 73) are fitted rigidly to gear boxes (65) associated with the main frame beam (64).

3. An agricultural machine according to claim 1 or 2, characterized in that the adjusting means (72, 73) are constituted by an obliquely forwardly and outwardly extending support (72) which at its end carries a tube (73) folded through 90°, the horizontal leg of which tube extends to below the adjacent protective member (69) and partly carries the weight thereof.

4. An agricultural machine according to any one of the preceding claims, characterized in that the protective members (69) are constituted by screening bows which are located at the outer sides of the plane wherein the tine points of the rake members (3) are located.

5. An agricultural machine according to any one of the preceding claims, characterized in that each protective member (3) is mounted to its associated carrier (67) by means of a pivot sleeve (70), which pivot sleeves constitute a pivot axis extending parallel to their associated carriers (67).

6. An agricultural machine according to any one of the preceding claims, characterized in that there is arranged between the protective member (69) and its associated carrier (67) a spring (71) counter-balancing the weight of the protective member (69).

7. An agricultural machine according to any one of the preceding claims, characterized in that both on the front and the rear side of the carriers (67) there are arranged protective members (69).

8. An agricultural machine according to any one of the preceding claims, characterized in that the machine is provided with blocking means (28, 30, 35, 42, 44, 46, 50), which become operative due to an upward movement of the machine relative to the tractor, preventing the machine from pivoting relative to the tractor.

9. An agricultural machine according to claim 8, characterized in that said blocking means (28, 30, 35, 42, 44, 46, 50) comprise a locking bar (28) which with one end is pivotably connected with the arm (16) and is directed obliquely forward in the direction of the trestle (10), and guide means (40, 49), whereby said locking bar (28) is adapted to slide during normal operation along the guide means (40, 49) in its longitudinal direction and whereby, due to the upward movement of the machine relative to the tractor, a locking pin (35, 50) slides into an aperture (39) of the locking bar (28).

10. An agricultural machine according to claim 9, characterized in that the locking bar (28) is lockable relative to the lifting hitch (14) in at least one position by means of the locking pin (35; 46) which can be moved by the top rod of the lifting hitch of the tractor.
